# EUROPEAN PATENT APPLICATION

(11) **EP 4 738 286 A1**
(43) Date of publication of application: **06.05.2026**
(21) Application number: 24209840.8
(22) Date of filing: 30.10.2024
(51) Int. Cl.: G06V 10/84, G06V 20/59, G06V 40/18

(54) **A COMPUTER-IMPLEMENTED METHOD FOR DETECTING DRIVER DISTRACTION IN A CURRENT TRAFFIC SCENE**

(71) Applicant: TOYOTA JIDOSHA KABUSHIKI KAISHA, Aichi-ken, 471-8571 (JP); Glimpse Technology Limited, Bristol BS6 5JH (GB)
(72) Inventor: ABDELKAWY, Hazem, 1140 BRUSSELS (BE); PALMER, Luke, BRISTOL, BS6 5JH (GB); PALASEK, Petar, LONDON, NW6 3NL (GB)
(74) Representative: Cabinet Beau de Loménie

(57) **Abstract**

A computer-implemented method (20) for detecting driver distraction in a current traffic scene, comprising:
- capturing (21) the driver's gaze positions over time;
- constructing (22) a spatio-temporal graph representation of the current traffic scene, where detected objects in the current traffic scene and the driver's historical gaze positions data are represented as nodes;
- analyzing (23) the driver's gaze position in relation to the detected objects in the current traffic scene;
- estimating (24) a probability distribution of the driver's next gaze position based on the current traffic scene; and
- comparing (25) the current measured gaze position to the estimated gaze probability distribution to detect deviations indicative of the driver distraction.

## Description

### BACKGROUND OF THE INVENTION

### 1. Field of the invention

The present disclosure relates to the field of automotive safety systems and, more particularly, to an apparatus and a method for detecting driver distraction in a current traffic scene.

### 2. Description of Related Art

Increased traffic density on the roads necessitates that vehicle drivers maintain continuous and undivided attention to their surroundings. However, human capacity for sustained concentration is inherently limited, often leading to lapses in attention and critical driving errors.

Statistically, human error is implicated in approximately 94% of road accidents, largely due to factors like driver inattention, distractions, and insufficient situational awareness.

To address this, Advanced Driver Assistance Systems (ADAS) have been developed to reduce cognitive load on drivers, employing sensors such as cameras, LiDAR, and radar to monitor the vehicle's external environment. These sensors provide real-time data on the surroundings, enabling the system to identify potential hazards, such as vehicles, pedestrians, and obstacles. Using machine learning models, ADAS classifies these detected objects into predefined categories and determines the appropriate response - whether that involves autonomous actions, such as automatic braking, or issuing warnings through visual audio, or haptic feedback to alert the driver.

However, one of the primary challenges with current ADAS technology is its limited ability to accurately recognize driver distraction which can come from a variety of sources; including both internal (e.g., fatigue or cognitive strain) and external (e.g., interactions with passengers or mobile devices) factors.

While ADAS systems excel at detecting and responding to external hazards, it often overlooks a critical internal factor: the driver's level of attention. Thus, even when ADAS accurately identifies obstacles or road conditions, if the driver is distracted, their response may be delayed or ineffective, increasing the risk of accidents. Accordingly, recognizing driver distraction is essential, as it directly impacts road safety.

To address this gap, integrating monitoring systems which utilizes in-vehicle cameras and sensors to track the driver's gaze is important to identify moments of distraction. The need for such an integration is particularly urgent as vehicles progress toward higher levels of automation (levels 2-4), where the driver may not always be fully engaged with driving tasks.

Without robust monitoring of the driver's attention, even the most advanced ADAS could fail in situations where quick human intervention is needed. Therefore, there is a need to incorporate distraction recognition capabilities to ensure timely interventions, maintaining safety in increasing complex driving environments.

### SUMMARY

The object of the present invention is to at least substantially address the aforementioned drawbacks. In this respect, the aim of the invention is to provide a computer-implemented method for detecting driver distraction in a current traffic scene, comprising:
- capturing the driver's gaze positions over time;
- constructing a spatio-temporal graph representation of the current traffic scene, where detected objects in the current traffic scene and the driver's historical gaze positions data are represented as nodes;
- analyzing the driver's gaze position in relation to the detected objects in the current traffic scene;
- estimating a probability distribution of the driver's next gaze position based on the current traffic scene; and
- comparing the current measured gaze position to the estimated gaze probability distribution to detect deviations indicative of the driver distraction.

The invention aims to improve the detection of driver distraction by addressing certain limitations in current systems.

The method begins by tracking the driver's gaze positions continuously as they drive. This is done using for example sensors such as in-vehicle cameras or eye-tracking devices that can monitor where the driver is looking at any given moment. These gaze positions are recorded as time-series data, capturing the movement of the driver's eyes and attention over time.

Next, the method builds a graph that represents the current traffic scene, where both the detected objects (such as vehicles, pedestrians, or traffic signs) and the driver's historical gaze data are modeled as nodes. The "spatio-temporal" aspect means that the graph captures both the spatial arrangement of objects in the scene and the timing of the driver's gaze behavior. This allows analyzing the relationships between the driver's focus points and the relevant traffic objects over time.

Once the graph is constructed, the method evaluates how the driver's gaze positions align with the objects in the traffic scene.

To predict future driver behavior, the method uses the traffic scene and the driver's historical gaze data to estimate a probability distribution of where the driver is likely to look next. This probabilistic model accounts for expected gaze behaviors, based for example on factors like the proximity of other vehicles, road signs, and driving conditions. For instance, if the driver is approaching an intersection, the method may expect their gaze to shift toward traffic signals or crossing pedestrians.

Finally, the system compares the driver's actual gaze position with the estimated probability distribution. If the driver's gaze deviates significantly from the expected areas of focus, this deviation is flagged as potential distraction. For example, if the method predicts that the driver should be focusing on a nearby pedestrian, but their gaze is directed elsewhere (e.g., at a phone or unrelated area), this would indicate a distraction. Accordingly, the system performing the method can then take appropriate action.

Thus, this method offers a robust approach to detecting driver distraction by continuously tracking gaze behavior, building a contextual understanding of the traffic scene, and identifying when the driver's attention deviates from expected patterns.

Optionally, the computer-implemented method further comprises triggering an alert if the deviation exceeds a predefined threshold, indicating driver distraction.

After detecting deviations in the driver's gaze behavior relative to the expected gaze probability distribution, the method evaluates the magnitude of these deviations. A deviation occurs when the driver's gaze significantly differs from the predicted or expected focus areas based on the current traffic scene.

All the gaze deviations may not be treated equally. To avoid for example false positives (e.g., minor, non-critical gaze shift), the method uses a predefined threshold to determine what constitutes a significant deviation. This threshold can be calibrated based on various factors, such as driving speed, road conditions, or the critical nature of the detected objects. For instance, on a busy highway, even small deviations might be important, whereas on an empty rural road, the system might tolerate larger deviations without triggering an alert.

If the driver's gaze deviation surpasses the predefined threshold, this suggests a high likelihood that the driver is distracted. The deviation is then considered significant enough to warrant concern. It is then concluded that the driver is no longer sufficiently engaged with road environment. The system performing the method triggers an alert to notify the driver. The alert can take different forms, - visual audio, or haptic feedback (e.g., vibrations through the steering wheel or seat) - aimed at quickly re-engaging the driver's attention. In other words, the purpose of the alert is to prompt the driver to refocus on the driving task and relevant traffic conditions, potentially preventing accidents. In some cases, the alert may escalate if the distraction persists, or the system could take additional preventive actions, such as slowing the vehicle in automated driving scenarios.

Optionally, analyzing the driver's gaze position comprises executing a graph transformer model.

At the core of the method is the need to analyze the driver's gaze positions in real-time. The driver's gaze is continuously tracked and compared with objects in the current traffic scene. This requires the system performing the method to interpret where the driver is looking and how their attention shifts over time. To accurately model and predict these gaze shifts, the method employs a machine learning model suited to understanding the relationships between gaze points and objects.

As previously explained, the method constructs a spatio-temporal graph of the traffic scene, where nodes represent detected objects (e.g., vehicles, pedestrians, traffic signs) and the driver's historical gaze positions. This graph provides a structured representation of how the driver interacts visually with the environment, capturing both the spatial layout of the scene and the timing of the driver's gaze shifts.

To analyze this graph effectively, the method employs a graph transformer model, which is neural network architecture designed to process graph-structured data. Graph transformer models are particularly well-suited for tasks where relationships between nodes need to be considered simultaneously, rather than in isolation. This is advantageous because it allows the model to capture complex interactions between objects in the traffic scene.

More specifically, the graph transformer model receives the spatio-temporal graph as input, allowing to focus on key elements of the traffic scene (such as nearby cars or pedestrians) while also considering how the driver's gaze interacts with these elements.

The model can learn the patterns of gaze movement based on past data, understanding how drivers typically look at important objects under different traffic conditions. This ability to learn patterns over time is advantageous for predicting where the driver should focus next and identifying any deviations from these expected behaviors.

The transformer model's self-attention mechanism allows it to prioritize certain relationships in the graph more heavily, such as focusing more on nearby vehicles when driving at high speed or giving more weight to traffic signals when approaching intersections.

While still relatively recent, graph transformers are becoming conventional methods in machine learning for handling spatio-temporal data, as they enable robust, real-time analysis that enhances the system's ability to detect driver distraction. Thus, a skilled person in the art would know how to leverage the transformer's mechanisms to adapt it specifically to this context, configuring it to analyze gaze patterns in relation to dynamic traffic scene.

Optionally, the graph transformer model is configured to process both spatial and temporal relationships between objects in the traffic scene.

As explained above, the graph transformer model can be specifically designed to process both spatial and temporal relationships between objects in the traffic scene, providing a comprehensive understanding of how the driver's attention interacts with their environment.

The spatial aspect refers to the physical positioning and proximity of objects, such as vehicles, pedestrians, or road signs, relative to the driver and each other. By analyzing the driver's gaze in this spatial context, the model can determine which objects are most relevant based on their location and importance to safe driving.

The temporal aspect involves tracking the driver's gaze over time, capturing patterns of how attention shifts from one object to another as the driving scene evolves. This temporal analysis is advantageous for understanding the flow of the driver's attention and predicting where they are likely to focus next. For instance, if the vehicle is approaching quickly from the side, the model anticipates that the driver should shift their gaze in that direction.

Optionally, the detected objects are classified into categories including vehicles, pedestrians, and traffic control devices, each being represented as distinct node types in the spatio-temporal graph.

This classification allows the system to differentiate between various types of objects, assigning specific attributes and behaviors to each node type based on its role in the driving environment. For example, vehicles might be associated with attributes such as speed, direction, and proximity, while pedestrians are categorized by movement patterns and crossing behavior.

By assigning these objects to different node types, the system can better interpret their relevance to the driver's attention and respond accordingly.

Optionally, the historical gaze positions data are incorporated in the spatio-temporal graph by connecting gaze nodes across multiple timeframes.

Each gaze position at a specific moment is represented as a node, and these nodes are linked together in the graph to form a continuous sequence over time. This allows the system performing the method to capture the temporal flow of the driver's attention, showing how it moves from one point in the scene to another as the traffic environment evolves.

By connecting these gaze nodes across timeframes, the system can analyze patterns in the driver's gaze behavior, such as how long their attention lingers on certain objects or how quickly it shifts between different areas of the scene.

This temporal linking is advantageous for detecting deviations from expected gaze patterns, as it highlights moments where the driver's attention may have wandered from relevant objects or areas.

Optionally, estimating the probability of the driver's next gaze position comprises predicting gaze shifts toward the detected objects using a Gaussian mixture model.

The Gaussian mixture model operates by representing the distribution of potential gaze positions as a combination of multiple Gaussian distributions. The model can predict where the driver is likely to direct their gaze next. This approach is advantageous because it allows for a flexible, probabilistic representation of gaze behavior that account for variations in attention patterns based on the dynamic traffic scene.

Gaussian mixture models (GMMs) is a conventional method in statistical modeling, making them reliable and well-understood for applications requiring probabilistic estimations. Further, GMMs are computationally efficient and are easy to adapt to real-time processing needs.

The present disclosure further relates to a computer program set including instructions for executing the steps of the above-described computer-implemented method when said program set is executed by at least one computer.

This program set can use any programming language and take the form of source code, object code, or a code intermediate between source code and object code, such as a partially compiled form or any other desirable form.

The present disclosure further relates to a recording medium readable by at least one computer and having recorded thereon at least one computer program including instructions for executing the steps of the above-described computer-implemented method.

The present disclosure further relates to an apparatus for detecting driver distraction in a current traffic scene, comprising:
- a capturing module configured to capture the driver's gaze positions over time ;
- a constructing module configured to construct a spatio-temporal graph representation of the current traffic scene, where detected objects in the current traffic scene and the driver's historical gaze positions data are represented as nodes ;
- an analyzing module configured to analyze the driver's position in relation to the detected objects in the current traffic scene ;
- an estimating module configured to estimate a probability distribution of the driver's next gaze position based on the traffic scene ; and
- a comparing module configured to compare the current measured gaze position to the estimated gaze probability distribution to detect deviations indicative of the driver distraction.

The apparatus referred to hereinafter as the detecting apparatus, may be configured to carry out the above-mentioned method (referred to hereinafter as the detecting method) and may have part or all of the above-described features. The determining apparatus may have the hardware structure of a computer.

Optionally, the capturing module is an in-vehicle camera or an eye tracking system.

By employing an in-vehicle camera, the apparatus captures video footage of the driver's face and eye movements, enabling the analysis of gaze patterns in relation to the surrounding traffic scene. On the other hand, an eye-tracking system enhances this capability by utilizing advanced sensors and algorithms specifically designed to detect and measure the precise location of the driver's gaze.

The present disclosure further relates to a vehicle comprising an apparatus as described above.

The term "vehicle" may be directed to an apparatus capable of transporting people from one location to another, such as a car or a motorcycle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram of a detecting apparatus according to an embodiment of the present disclosure; and
- FIG.2 is a flowchart of a detecting method according to an embodiment of the present disclosure.

### DETAILED DESCRIPTION OF EMBODIMENTS

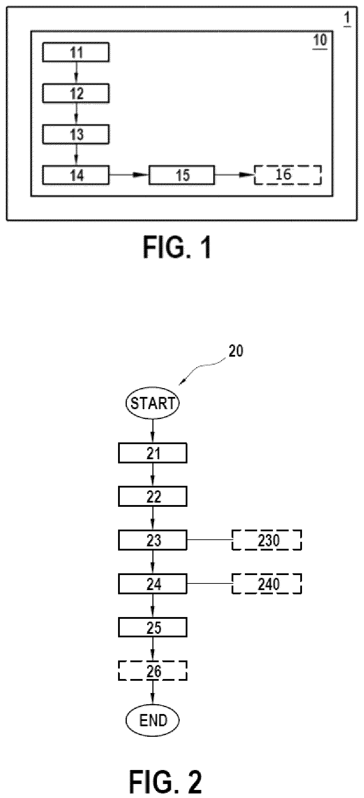

Figure 1 shows a block diagram of a detecting apparatus 10 comprising a capturing module 11, a constructing module 12, an analyzing module 13, and an estimating module 14, and a comparing module 15. The detecting apparatus 10 may be located inside a vehicle 1 which may be, without limitation, an autonomous or semi-autonomous vehicle. Such vehicle 1 may be directed to an apparatus capable of transporting people or objects from one location to another, such as a car or a motorcycle, and may be categorized into different levels based on the extent of automation and human involvement in the driving tasks.

Alternatively, the detecting apparatus 10 may be partially located outside the vehicle 1. As a first example, functions of the constructing module 12 or the analyzing module 13, are executed via cloud computing. As a second example, only functions of the constructing module 12 are executed via cloud computing. Accordingly, the functions of the capturing module 11, the estimating module 14, and the comparing module 15 are executed inside the vehicle 1.

The detecting module 10 may be configured to detect driver distraction in a current traffic scene.

The detecting module 10 may comprise an electronic circuit, a processor (shared, dedicated, or group), a combinational logic circuit, a memory that executes one or more software programs, and/or other suitable components that provide the described functionality. In other words, the detecting apparatus 10 may be a computer device. The detecting apparatus 10 may be connected to a memory, which may store data, e.g., at least one computer program, which, when executed, carries out the detecting method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be an integrated circuit in which the program is incorporated, the circuit being adapted to execute the detecting method or to be used in its execution.

The capturing module 11 is a module configured to capture the driver's gaze positions over time. This module 11 is designed to continuously monitor and capture data on where the driver is looking, allowing for real-time input on gaze direction and duration, which is advantageous for assessing attention and detecting potential distraction.

The capturing module 11 may be an in-vehicle camera or an eye tracking system, or any other device capable of tracking the driver's gaze position over time.

The constructing module 12 is a module configured to construct a spatio-temporal graph representation of the current traffic scene, where detected objects in the current traffic scene and the driver's historical gaze positions data are represented as nodes.

The spatio-temporal graph represents the current traffic scene, where both the detected objects (such as vehicles, pedestrians, or traffic signs) and the driver's historical gaze data are modeled as nodes. The "spatio-temporal" aspect means that the graph captures both the spatial arrangement of objects in the scene and the timing of the driver's gaze behavior. This allows analyzing the relationships between the driver's focus points and the relevant traffic objects over time.

The historical gaze positions data may be incorporated in the spatio-temporal graph by connecting gaze nodes across multiple timeframes.

As explained above, each gaze position at a specific moment is represented as a node, and these nodes are linked together in the graph to form a continuous sequence over time. This allows capturing the temporal flow of the driver's attention, showing how it moves from one point in the scene to another as the traffic environment evolves.

By connecting these gaze nodes across timeframes, the system can analyze patterns in the driver's gaze behavior, such as how long their attention lingers on certain objects or how quickly it shifts between different areas of the scene.

This temporal linking is advantageous for detecting deviations from expected gaze patterns, as it highlights moments where the driver's attention may have wandered from relevant objects or areas.

The constructing module 12 may be implemented as software running on the detecting apparatus 10 or may be implemented partially as a hardware element of the detecting apparatus 10.

The analyzing module 13 is a module configured to analyze the driver's position in relation to the detected objects in the current traffic scene. In other words, the analyzing module 13 is configured to evaluate how the driver's gaze positions align with the objects in the current traffic scene.

The analyzing module 13 may be configured to execute a graph transformer model as described above in order to analyse the driver's gaze position. To this end, the graph transformer may be configured to process both spatial and temporal relationships between objects in the traffic scene.

It should be noted that the analyzing module 13 may be implemented as software running on the detecting apparatus 10. The analyzing module 13 may also be implemented partially as a hardware element of the detecting apparatus 10.

The estimating module 14 is a module configured to estimate a probability distribution of the driver's next gaze position based on the traffic scene. In fact, to predict future driver behavior, the detecting apparatus 10 uses the traffic scene and the driver's historical gaze data to estimate a probability distribution of where the driver is likely to look next. This probabilistic model accounts for expected gaze behaviors, based for example on factors like the proximity of other vehicles, road signs, and driving conditions. For instance, if the driver is approaching an intersection, the estimating module 14 may expect their gaze to shift toward traffic signals or crossing pedestrians.

To this end, the estimating module 14 may be configured to predict gaze shifts toward the detected objects using a Gaussian mixture model as described above.

The estimating module 14 may be implemented as software running on the detecting apparatus 10. The estimating module 14 may also be implemented partially as a hardware element of the detecting apparatus 10.

The comparing module 15 is a module configured to compare the current measured gaze position to the estimated gaze probability distribution to detect deviations indicative of the driver distraction. If the driver's gaze deviates significantly from the expected areas of focus, this deviation is flagged as potential distraction. For example, if the estimating module 14 predicts that the driver should be focusing on a nearby pedestrian, but their gaze is directed elsewhere (e.g., at a phone or unrelated area), this would indicate a distraction. Accordingly, the detecting apparatus 10 can then take appropriate action.

The comparing module 15 may be implemented as software running on the detecting apparatus 10. The comparing module 15 may also be implemented partially as a hardware element of the detecting apparatus 10.

The tasks carried out by the detecting apparatus 10 are detailed hereinafter with respect to the corresponding detecting method, an embodiment of which is illustrated in Fig. 2.

Figure 2 is a flowchart of the detecting method 20 according to an embodiment of the present disclosure. The detecting method 20 is a method for detecting driver distraction in a current traffic scene.

The detecting method 20 comprises a step 21 of capturing the driver's gaze positions over time. Such step 21 is performed by the capturing module 11.

That is, the detecting method 20 further comprises a step 22 of constructing a spatio-temporal graph representation of the current traffic scene, where detected objects in the current traffic scene and the driver's historical gaze positions data are represented as nodes. The step 22 is performed by the constructing module 12.

The detected objects may be classified into categories including vehicles, pedestrians, and traffic control devices, each being represented as distinct node type of the spatio-temporal graph.

Further, the historical gaze positions data may be incorporated in the spatio-temporal graph by connecting gaze nodes across multiple timeframes.

The detecting method 20 further comprises a step 23 of analyzing the driver's gaze position in relation to the detected objects in the current traffic scene. This step 23 is performed by the analyzing module 13.

The step 23 comprises optionally a substep 230 comprising executing a graph transformer model as described above. The graph transformer model may be configured to process both spatial and temporal relationships between objects in the traffic scene.

The detecting method 20 further comprises a step 24 of estimating a probability distribution of the driver's next gaze position based on the current traffic scene. The step 24 is performed by the estimating module 14.

The step 24 further optionally comprises a substep 240 comprising predicting gaze shifts toward the detected objects using a Gaussian mixture model as described above.

Finally, the detecting method 20 comprises a step 25 of comparing the current measured gaze position to the estimated gaze probability distribution to detect deviations indicative of the driver distraction. The step 25 is performed by the comparing module 15.

The detecting method 20 can comprise an optional step 26 performed by an optional module of the detecting apparatus 10, for example an alert module 16. The step 26 comprises triggering an alert if the deviation exceeds a predefined threshold, indicating driver distraction.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense. Of course, the invention is not limited to the field of driving assistance systems but can be used in any field where detection of human's distraction is required.

## Claims

1. A computer-implemented method (20) for detecting driver distraction in a current traffic scene, comprising:
- capturing (21) the driver's gaze positions over time;
- constructing (22) a spatio-temporal graph representation of the current traffic scene, where detected objects in the current traffic scene and the driver's historical gaze positions data are represented as nodes;
- analyzing (23) the driver's gaze position in relation to the detected objects in the current traffic scene;
- estimating (24) a probability distribution of the driver's next gaze position based on the current traffic scene; and
- comparing (25) the current measured gaze position to the estimated gaze probability distribution to detect deviations indicative of the driver distraction.

2. The computer-implemented method (20) according to claim 1, further comprising triggering (26) an alert if the deviation exceeds a predefined threshold, indicating driver distraction.

3. The computer-implemented method (20) according to claim 1 or 2, wherein analyzing (23) the driver's gaze position comprises executing (230) a graph transformer model.

4. The computer-implemented method (20) according to claim 3, wherein the graph transformer model is configured to process both spatial and temporal relationships between objects in the traffic scene.

5. The computer-implemented method (20) according to any one of claims 1 to 4, wherein the detected objects are classified into categories including vehicles, pedestrians, and traffic control devices, each being represented as distinct node types in the spatio-temporal graph.

6. The computer-implemented method (20) according to any one of claims 1 to 5, wherein the historical gaze positions data are incorporated in the spatio-temporal graph by connecting gaze nodes across multiple timeframes.

7. The computer-implemented method (20) according to any one of claims 1 to 6, wherein estimating (24) the probability of the driver's next gaze position comprises predicting (240) gaze shifts toward the detected objects using a Gaussian mixture model.

8. A computer program set including instructions for executing the steps of the method (20) of any one of claims 1 to 7 when said program set is executed by at least one computer.

9. A recording medium readable by at least one computer and having recorded thereon at least one computer program including instructions for executing the steps of the method (20) of any one of claims 1 to 7.

10. An apparatus (10) for detecting driver distraction in a current traffic scene, comprising:
- a capturing module (11) configured to capture the driver's gaze positions over time ;
- a constructing module (12) configured to construct a spatio-temporal graph representation of the current traffic scene, where detected objects in the current traffic scene and the driver's historical gaze positions data are represented as nodes ;
- an analyzing module (13) configured to analyze the driver's position in relation to the detected objects in the current traffic scene ;
- an estimating module (14) configured to estimate a probability distribution of the driver's next gaze position based on the traffic scene ; and
- a comparing module (15) configured to compare the current measured gaze position to the estimated gaze probability distribution to detect deviations indicative of the driver distraction.

11. The apparatus (10) according to claim 10, wherein the capturing module (11) is an in-vehicle camera or an eye-tracking system.

12. A vehicle (1) comprising an apparatus (10) according to claim 10 or 11.

## Amended claims

### Amended claims in accordance with Rule 137(2) EPC.

1. A computer-implemented method (20) for detecting driver distraction in a current traffic scene, comprising:
- capturing (21) the driver's gaze positions over time;
- constructing (22) a spatio-temporal graph representation of the current traffic scene, where detected objects in the current traffic scene and the driver's historical gaze positions data are represented as nodes;
the computer-implemented method being **characterized in that** it comprises:
- analyzing (23) the spatio-temporal graph representation using a graph transformer model configured to process spatial and temporal relationships between the detected objects and the driver's gaze position in the current traffic scene;
- estimating (24) a probability distribution of the driver's next gaze position based on the current traffic scene by predicting gaze shifts toward the detected objects using a Gaussian Mixture Model; and
- comparing (25) the current measured gaze position to the estimated gaze probability distribution to detect deviations indicative of the driver distraction.

2. The computer-implemented method (20) according to claim 1, further comprising triggering (26) an alert if the deviation exceeds a predefined threshold, indicating driver distraction.

3. The computer-implemented method (20) according to claim 2, wherein the predefined threshold is calibrated based on at least one of driving speed, road conditions, or the critical nature of the detected objects.

4. The computer-implemented method (20) according to any one of claims 1 to 3, wherein the spatial relationships between the detected objects and the driver's gaze position are the physical positioning and proximity of objects relative to the driver and each other.

5. The computer-implemented method (20) according to any one of claims 1 to 4, wherein the temporal relationships between the detected objects and the driver's gaze position involves tracking the driver's gaze over time, capturing patterns of how attention shifts from one object to another as the driving scene evolves.

6. The computer-implemented method (20) according to any one of claims 1 to 5, wherein the detected objects are classified into categories including vehicles, pedestrians, and traffic control devices, each being represented as distinct node types in the spatio-temporal graph.

7. The computer-implemented method (20) according to any one of claims 1 to 6, wherein the historical gaze positions data are incorporated in the spatio-temporal graph by connecting gaze nodes across multiple timeframes.

8. A computer program set including instructions for executing the steps of the method (20) of any one of claims 1 to 7 when said program set is executed by at least one computer.

9. A recording medium readable by at least one computer and having recorded thereon at least one computer program including instructions for executing the steps of the method (20) of any one of claims 1 to 7.

10. An apparatus (10) for detecting driver distraction in a current traffic scene, comprising:
- a capturing module (11) configured to capture the driver's gaze positions over time ;
- a constructing module (12) configured to construct a spatio-temporal graph representation of the current traffic scene, where detected objects in the current traffic scene and the driver's historical gaze positions data are represented as nodes ;
the apparatus (10) being **characterized in that** it comprises:
- an analyzing module (13) configured to analyze the spatio-temporal graph representation using a graph transformer model configured to process spatial and temporal relationships between the detected objects and the driver's position in the current traffic scene ;
- an estimating module (14) configured to estimate a probability distribution of the driver's next gaze position based on the current traffic scene by predicting gaze shifts toward the detected objects using a Gaussian Mixture Model ; and
- a comparing module (15) configured to compare the current measured gaze position to the estimated gaze probability distribution to detect deviations indicative of the driver distraction.

11. The apparatus (10) according to claim 10, wherein the capturing module (11) is an in-vehicle camera or an eye-tracking system.

12. A vehicle (1) comprising an apparatus (10) according to claim 10 or 11.
